# EUROPEAN PATENT APPLICATION

(11) **EP 4 530 078 A1**
(43) Date of publication of application: **02.04.2025**
(21) Application number: 24200722.7
(22) Date of filing: 17.09.2024
(51) Int. Cl.: B41J 2/205, B41J 2/21, G06K 15/10, B41J 2/14, B41J 2/145

(54) **LIQUID DISCHARGE APPARATUS, LIQUID DISCHARGE METHOD, AND CARRIER MEDIUM**

(30) Priority: 29.09.2023 JP 2023170750
(71) Applicant: Ricoh Company, Ltd., Tokyo 143-8555 (JP)
(72) Inventor: ARAKI, Satomi, Tokyo, 143-8555 (JP); YOSHIDA, Takahiro, Tokyo, 143-8555 (JP)
(74) Representative: SSM Sandmair

(57) **Abstract**

A liquid discharge apparatus (100) includes multiple heads (122) and a discharge control unit (212). The multiple heads (122) include a first head (122a) and a second head (122b). A first nozzle array has first overlapped nozzles in one end in an array direction. A second nozzle array has second overlapped nozzles in another end in the array direction. The second overlapped nozzles are overlapped with the first overlapped nozzles in an overlapping region (300) in the array direction. The discharge control unit (212) causes the multiple heads (122) to discharge liquid droplets to form mask pattern having both of first pixels and second pixels arrayed in the array direction in the overlapping region (300) and intersecting pixels having either the first pixels or the second pixels arrayed in an intersecting direction intersecting the array direction in the overlapping region (300).

## Description

### BACKGROUND

### Technical Field

Embodiments of the present disclosure relate to a liquid discharge apparatus, a liquid discharge method, and a carrier medium.

### Related Art

In the related art, a technique related to image processing of a nozzle overlapping region in which ends of adjacent liquid discharge heads overlap each other is already known.

Japanese Patent No. 3702711 discloses a technique in which the nozzle overlap region is masked, and an image is formed with printed dots mixed by two liquid discharge heads to prevent a decrease in image quality in the nozzle overlap region of the liquid discharge heads.

However, when the printed dots are distributed to the two liquid discharge heads in the nozzle overlap region as in the related art, the drive frequency per nozzle may decrease as compared with a normal nozzle region other than the nozzle overlap region. Typically, the volume of a droplet discharged from the liquid discharge head is likely to vary depending on the drive frequency, and thus the dot size of the printed dots changes in the masked nozzle overlap region. A portion where the dot size of the printed dots changes in the nozzle overlap region as described above may be visually recognized as density unevenness or a streak.

Ideally, in the masked nozzle overlap region, the printed dots discharged from the two liquid discharge heads land at ideal positions. However, if the landing positions of the printed dots of one liquid discharge head is deviated from those of the other liquid discharge head due to a positional deviation or a difference in droplet speed between the two liquid discharge heads, a portion of an image formed of the printed dots in the nozzle overlap region may not have the same density as that in the normal nozzle region. Thus, the portion not having the same density as that in the normal nozzle region may also be visually recognized as the density unevenness or the streak.

### SUMMARY

The present disclosure has been made in view of the above, and an object of the present disclosure is to make the image quality uniform in the nozzle overlap region of head ends between the adjacent liquid discharge heads.

Embodiments of the present disclosure describe an improved liquid discharge apparatus that includes multiple heads and a discharge control unit. The multiple heads include a first head having a first nozzle array having multiple nozzles arrayed in an array direction and a second head adjacent to the first head in an intersecting direction intersecting the array direction. The first nozzle array has first overlapped nozzles in one end of the multiple nozzles in the array direction. The second head has a second nozzle array having multiple nozzles arrayed in the array direction. The second nozzle array has second overlapped nozzles in another end of the multiple nozzles in the array direction. The second overlapped nozzles are overlapped with the first overlapped nozzles in an overlapping region in the array direction. The discharge control unit causes the multiple heads to discharge liquid droplets to form mask pattern having both of first pixels formed by the liquid droplets discharged from the first nozzle array and second pixels formed by the liquid droplets discharged from the second nozzle array in the overlapping region (the first pixels and the second pixels are arrayed in the array direction) and intersecting pixels arrayed in the intersecting direction (the intersecting pixels have either the first pixels formed by the first nozzle array or the second pixels formed by the second nozzle array arrayed in the intersecting direction in the overlapping region).

According to another embodiment of the present disclosure, there is provided a liquid discharge method including causing a first head to discharge liquid droplets. The first head has a first nozzle array having multiple nozzles arrayed in an array direction. The first nozzle array has first overlapped nozzles in one end of the multiple nozzles in the array direction. The liquid discharge method further includes causing a second head to discharge the liquid droplets. The second head is disposed adjacent to the first head in an intersecting direction intersecting the array direction. The second head has a second nozzle array having multiple nozzles arrayed in the array direction. The second nozzle array has second overlapped nozzles in another end of the multiple nozzles in the array direction. The second overlapped nozzles are overlapped with the first overlapped nozzles in an overlapping region in the array direction. The liquid discharge method further includes causing the first head and the second head to discharge the liquid droplets to form mask pattern having both of first pixels formed by the liquid droplets discharged from the first nozzle array and second pixels formed by the liquid droplets discharged from the second nozzle array in the overlapping region (the first pixels and the second pixels are arrayed in the array direction) and intersecting pixels arrayed in the intersecting direction (the intersecting pixels have either the first pixels formed by the first nozzle array or the second pixels formed by the second nozzle array arrayed in the intersecting direction in the overlapping region).

According to yet another embodiment of the present disclosure, there is provided a carrier medium carrying computer readable code for controlling a computer system to carry out a method. The method includes causing a first head to discharge liquid droplets. The first head has a first nozzle array having multiple nozzles arrayed in an array direction. The first nozzle array has first overlapped nozzles in one end of the multiple nozzles in the array direction. The method further includes causing a second head to discharge the liquid droplets. The second head is disposed adjacent to the first head in an intersecting direction intersecting the array direction. The second head has a second nozzle array having multiple nozzles arrayed in the array direction. The second nozzle array has second overlapped nozzles in another end of the multiple nozzles in the array direction. The second overlapped nozzles are overlapped with the first overlapped nozzles in an overlapping region in the array direction. The method further includes causing the first head and the second head to discharge the liquid droplets to form mask pattern having both of first pixels formed by the liquid droplets discharged from the first nozzle array and second pixels formed by the liquid droplets discharged from the second nozzle array in the overlapping region (the first pixels and the second pixels are arrayed in the array direction) and intersecting pixels arrayed in the intersecting direction (the intersecting pixels have either the first pixels formed by the first nozzle array or the second pixels formed by the second nozzle array arrayed in the intersecting direction in the overlapping region).

As a result, according to one aspect of the present disclosure, an effect of making the image quality uniform in the nozzle overlap region of the head ends of the adjacent liquid discharge heads can be achieved.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a perspective view of an image forming apparatus according to a first embodiment of the present disclosure, illustrating the interior thereof transparently;
FIG. 2 is a schematic plan view of the image forming apparatus of FIG. 1;
FIG. 3 is a block diagram illustrating a hardware configuration of the image forming apparatus of FIG. 1;
FIG. 4 is a block diagram illustrating a functional configuration of a controller of the image forming apparatus of FIG. 1;
FIG. 5 is a diagram illustrating a mask pattern according to a comparative example when end nozzles of two heads arranged in the X direction overlap each other;
FIG. 6 is a graph of drive frequency characteristics of a discharged droplet volume according to the comparative example;
FIG. 7 is a diagram illustrating the drive frequency characteristics of FIG. 6 and the mask pattern of FIG. 5, according to the comparative example;
FIG. 8 is a diagram illustrating a Y deviation and the mask pattern of FIG. 5, according to the comparative example;
FIG. 9 is a diagram illustrating a mask pattern according to the first embodiment;
FIG. 10 is a diagram illustrating a mask pattern according to a second embodiment of the present disclosure;
FIG. 11 is a graph of nozzle usage rate in a nozzle overlapping region of the mask pattern of FIG. 10, according to the second embodiment;
FIG. 12 is a diagram illustrating a mask pattern according to a third embodiment of the present disclosure;
FIG. 13 is a diagram illustrating another mask pattern;
FIG. 14 is a diagram illustrating a mask pattern according to a fourth embodiment of the present disclosure;
FIG. 15 is a diagram illustrating droplets discharged from an end portion of a liquid discharge head; and
FIG. 16 is a diagram illustrating another mask pattern.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

A liquid discharge head, a liquid discharge unit, a liquid discharge apparatus, a liquid discharge method, and a non-transitory recording medium according to embodiments of the present disclosure are described in detail below with reference to the accompanying drawings.

As a liquid discharge apparatus according to an embodiment of the present disclosure, an image forming apparatus, which is one aspect of the liquid discharge apparatus, will be described below, but an aspect of the liquid discharge apparatus is not limited thereto.

### First Embodiment

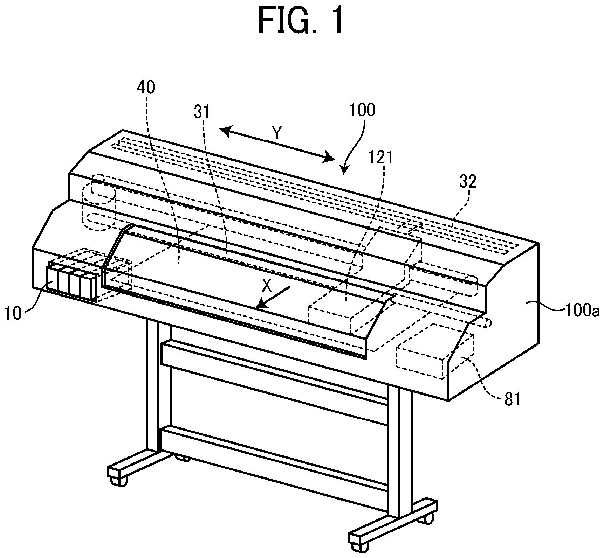

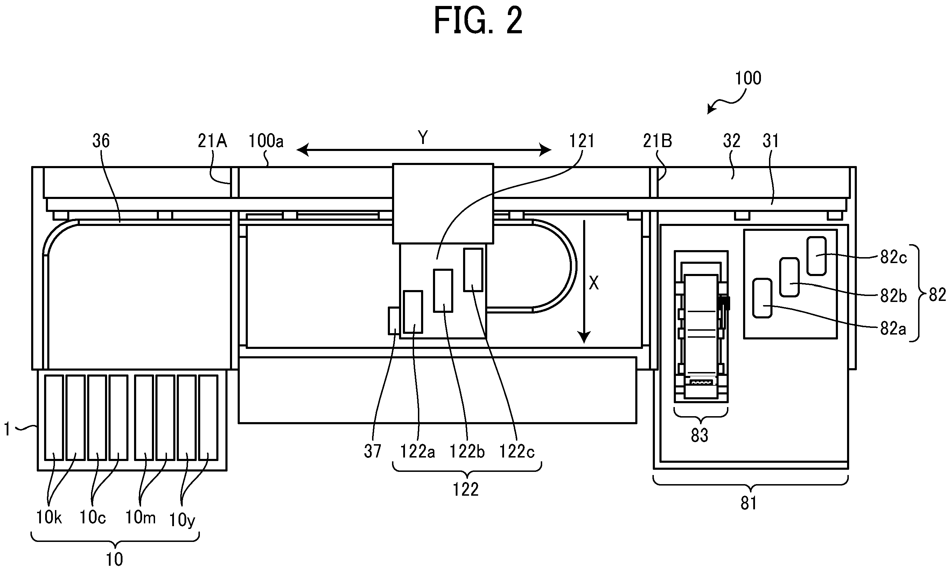

FIG. 1 is a perspective view of an image forming apparatus 100 according to a first embodiment of the present disclosure, illustrating the interior thereof transparently. FIG. 2 is a schematic plan view of the image forming apparatus 100. As illustrated in FIGS. 1 and 2, the image forming apparatus 100 according to the present embodiment is a wide, serial-type inkjet recording apparatus.

In the present embodiment, the liquid discharge apparatus according to the present disclosure is applied to the wide, serial-type inkjet recording apparatus, but can be applied to any image forming apparatus such as a multifunction peripheral having at least two functions of a copy function, a printer function, a scanner function, and a facsimile function, a copier, a printer, a scanner, or a facsimile machine.

As illustrated in FIGS. 1 and 2, the image forming apparatus 100 includes side plates 21A and 21B on the left and right of an apparatus body 100a. A main guide rod 31 as a guide is laterally bridged between the side plates 21A and 21B. The image forming apparatus 100 includes a sub sheet metal guide 32. The main guide rod 31 and the sub sheet metal guide 32 slidably hold a carriage 121.

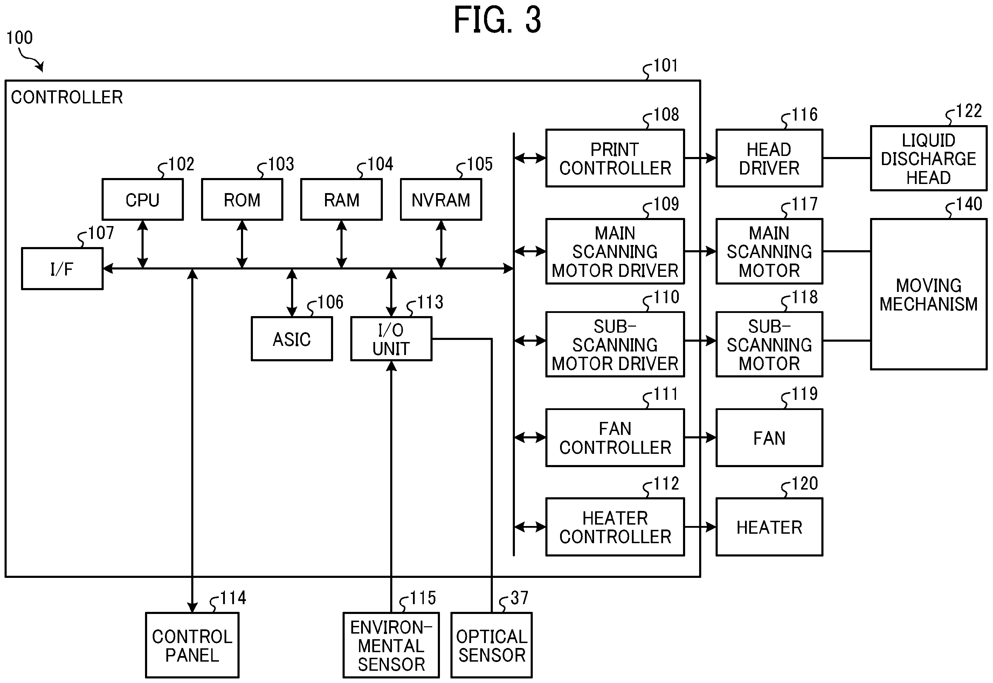

A main scanning motor 117 (see FIG. 3) rotates a timing belt to move the carriage 121 in the direction indicated by arrow Y in FIGS. 1 and 2 (a main scanning direction). As a result, the carriage 121 moves relative to a medium 40. The movement of the carriage 121 may also be referred to as scanning. The carriage 121 is provided with an optical sensor 37 that detects an end of the medium 40 (end of a sheet).

The optical sensor 37 is an example of a reading unit that outputs a read signal of an image that has been formed on the medium 40 by the image forming apparatus 100. As the optical sensor 37, for example, a device that detects an image by reflection density and a camera that captures an image formed on the medium 40 can be used.

The carriage 121 includes heads 122a, 122b, and 122c that discharge ink droplets (liquid) of respective colors such as yellow (Y), cyan (C), magenta (M), black (K), orange (O), green (G), and clear (Cl) in accordance with ink cartridges 10 mounted on the image forming apparatus 100. These three heads 122a, 122b, and 122c may be collectively referred to as "liquid discharge heads 122," each of which may be referred to as a "liquid discharge head 122" unless distinguished.

A sub-scanning motor 118 (see FIG. 3) rotates a conveyance roller to move the medium 40 in a sub-scanning direction (the direction indicated by arrow X in FIGS. 1 and 2) substantially orthogonal to the main scanning direction (Y direction). As a result, the medium 40 moves relative to the liquid discharge head 122. However, the main scanning direction (Y direction) is not necessarily substantially orthogonal to the sub-scanning direction (X direction), and may only intersect the sub-scanning direction.

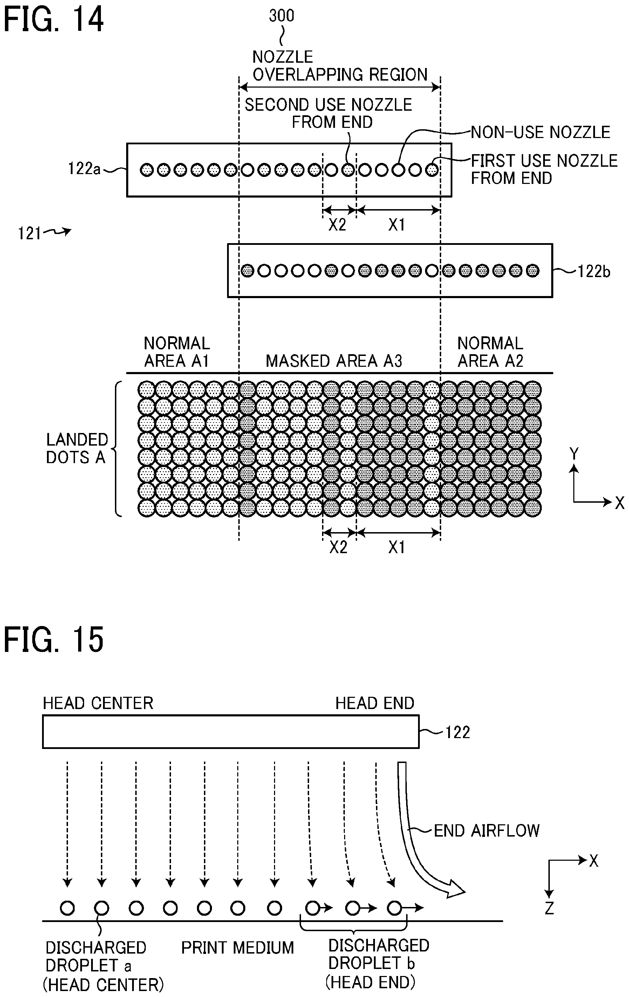

Each of the heads 122a, 122b, and 122c includes a nozzle array including multiple nozzles arranged in the sub-scanning direction (X direction, i.e., a nozzle array direction, or referred to simply as an array direction). The heads 122a, 122b, and 122c are mounted on the carriage 121 so as to discharge ink droplets downward (Z direction, see FIG. 15) from the nozzles. The heads 122a, 122b, and 122c overlap each other in the sub-scanning direction (X direction). The carriage 121 is provided with sub tanks for supplying ink of the respective colors to the heads 122a, 122b, and 122c.

The term "liquid discharge head (head)" used herein is a functional component to discharge liquid through the nozzles. Liquid to be discharged from the liquid discharge head 122 is not limited to a particular liquid as long as the liquid has a viscosity or surface tension to be discharged from the liquid discharge head 122. However, preferably, the viscosity of the liquid is not greater than 30 millipascal-second (mPa s) under ordinary temperature and ordinary pressure or by heating or cooling. Examples of the liquid to be discharged include a solution, a suspension, or an emulsion including, for example, a solvent, such as water or an organic solvent; a colorant, such as dye or pigment; a functional material, such as a polymerizable compound, a resin, or a surfactant; a biocompatible material, such as deoxyribonucleic acid (DNA), amino acid, protein, or calcium; and an edible material, such as a natural colorant. Such a solution, a suspension, or an emulsion can be used for, e.g., inkjet ink; surface treatment liquid; a liquid for forming an electronic element component, a light-emitting element component, or an electronic circuit resist pattern; or a material solution for three-dimensional fabrication.

Examples of an energy source of the liquid discharge head for generating energy to discharge liquid include a pressure generator such as a piezoelectric actuator (a laminated piezoelectric element or a thin-film piezoelectric element).

The pressure generator used in the liquid discharge head is not limited to a particular type of pressure generator. In addition to the above-described piezoelectric actuator (which may use a laminated piezoelectric element), for example, a thermal actuator using a thermoelectric transducer such as a thermal resistor, and an electrostatic actuator including a diaphragm and opposed electrodes can be used.

The image forming apparatus 100 includes a cartridge mount 1 on which ink cartridges 10y, 10c, 10m, and 10k for the respective colors are detachably mounted. The ink cartridges 10y, 10c, 10m, and 10k may be collectively referred to as "ink cartridges 10," each of which may be referred to as an "ink cartridge 10" unless distinguished.

Ink in the ink cartridge 10 is supplied to the sub tank of the carriage 121 through a supply tube 36 of each color by a supply pump unit. The supply pump unit and the supply tube 36 construct a supply mechanism. Examples of the ink cartridge 10 may include an ink cartridge for white ink.

The image forming apparatus 100 includes a maintenance mechanism 81 in a non-print area on one end of the range of movement of the carriage 121 in the main scanning direction (Y direction). The maintenance mechanism 81 maintains and recovers the condition of the nozzles of the liquid discharge head 122.

The maintenance mechanism 81 includes caps 82a, 82b, and 82c for covering nozzle faces of the liquid discharge heads 122 and a wiper unit 83 for wiping the nozzle faces. The caps 82a, 82b, and 82c may be collectively referred to as "caps 82," each of which may be referred to as a "cap 82" unless distinguished. A replaceable waste liquid tank that stores waste liquid caused by maintenance and recovery operations is disposed below the maintenance mechanism 81 for the liquid discharge head 122.

The "liquid discharge unit" refers to the liquid discharge head 122 integrated with functional components or mechanisms, i.e., an assembly of components related to liquid discharge. For example, the "liquid discharge unit" includes a combination of the liquid discharge head 122 with at least one of a head tank (i.e., the sub tanks of the carriage 121), the carriage 121, the supply mechanism, the maintenance mechanism 81, and a main-scanning moving mechanism.

The above integration may be achieved by, for example, a combination in which the liquid discharge head 122 and a functional part(s) are fixed to each other through, e.g., fastening, bonding, or engaging, and a combination in which one of the liquid discharge head 122 and the functional part(s) is movably held by the other. The liquid discharge head 122 and the functional part(s) or mechanism(s) may be detachably attached to each other.

For example, the liquid discharge head 122 and the head tank are integrated to form the liquid discharge unit as a single unit. Alternatively, the liquid discharge head 122 and the head tank coupled (connected) with, for example, a tube may construct the liquid discharge unit as a single unit. A unit including a filter may further be added to a portion between the head tank and the liquid discharge head 122 of the liquid discharge unit.

In another example, the liquid discharge unit may be an integrated unit in which the liquid discharge head 122 is integrated with the carriage 121.

As yet another example, the liquid discharge unit is a unit in which the liquid discharge head 122 and the main-scanning moving mechanism are combined into a single unit. The liquid discharge head 122 is movably held by the main guide rod 31 which is a guide forming a part of the main-scanning moving mechanism. The liquid discharge unit may include the liquid discharge head 122, the carriage 121, and the main-scanning moving mechanism that are integrated as a single unit.

In another example, the cap 82 that forms a part of the maintenance mechanism 81 is fixed to the carriage 121 mounting the liquid discharge head 122 so that the liquid discharge head 122, the carriage 121, and the maintenance mechanism 81 are integrated as a single unit to form the liquid discharge unit.

Further, in still another example, the liquid discharge unit includes the supply tube 36 connected to the liquid discharge head 122 mounting the head tank (sub tank of the carriage 121) or a channel component so that the liquid discharge head 122 and the supply mechanism are integrated as a single unit. Through the supply tube 36, the liquid in a liquid storage source is supplied to the liquid discharge head 122.

Examples of the main-scanning moving mechanism include the main guide rod 31 as a guide alone. Examples of the supply mechanism include the supply tube 36 alone and the cartridge mount 1 alone.

FIG. 3 is a block diagram illustrating an example of a hardware configuration of the image forming apparatus 100. As illustrated in FIG. 3, the image forming apparatus 100 includes a controller 101, a control panel 114, an environmental sensor 115, an optical sensor 37, a head driver 116, the main scanning motor 117, the sub-scanning motor 118, a fan 119, a heater 120, the liquid discharge head 122, and a moving mechanism 140.

As illustrated in FIG. 3, the controller 101 includes a central processing unit (CPU) 102, a read-only memory (ROM) 103, a random-access memory (RAM) 104, a non-volatile memory (NVRAM: non-volatile RAM) 105, an application-specific integrated circuit (ASIC) 106, an interface (I/F) 107, a print controller 108, a main scanning motor driver 109, a sub-scanning motor driver 110, a fan controller 111, a heater controller 112, and an input/output (I/O) unit 113. The controller 101 may include a configuration other than the above.

The CPU 102, the ROM 103, the RAM 104, the non-volatile memory 105, the ASIC 106, the I/F 107, the print controller 108, the main scanning motor driver 109, the sub-scanning motor driver 110, the fan controller 111, the heater controller 112, and the I/O unit 113 are connected to each other via, for example, a bus so as to communicate with each other.

The CPU 102 controls the operation of the entire image forming apparatus 100. Specifically, the CPU 102 executes programs stored in, for example, the ROM 103 to implement functions of the above configuration.

The ROM 103 stores the programs to be executed by the CPU 102 and other fixed data. The RAM 104 temporarily stores image data and other data. The non-volatile memory 105 can retain data even while a power supply of the image forming apparatus 100 is shut off. The ASIC 106 is a circuit that performs image processing, such as various signal processing and sorting, and processing of input and output signals for controlling the entire image forming apparatus 100.

The I/F 107 is an interface circuit that transmits and receives data and signals to and from a host. Specifically, the I/F 107 receives print data (image data) generated by a printer driver of the host such as a data processor, an image reading device, or an imaging device via a cable or a network. In other words, the printer driver of the host may generate and output the image data to the controller 101.

The print controller 108 is a circuit that generates a drive waveform for driving the liquid discharge head 122 and outputs the print data accompanied by various data to the head driver 116. The pressure generator of the liquid discharge head 122 is selectively driven based on the print data and generates pressure to cause the liquid discharge head 122 to discharge liquid (ink) from the nozzles.

The main scanning motor driver 109 is a circuit that drives the main scanning motor 117. The sub-scanning motor driver 110 is a circuit that drives the sub-scanning motor 118. The fan controller 111 is a circuit that controls the output of the fan 119 to blow air at a predetermined temperature and air volume.

The heater controller 112 is a circuit that controls the heater 120 to a set temperature. The I/O unit 113 is a circuit that acquires data from the environmental sensor 115 and extracts data for controlling each unit of the image forming apparatus 100. The I/O unit 113 also receives detection signals from various sensors (e.g., the optical sensor 37) other than the environmental sensor 115.

The control panel 114 is a device for inputting and displaying various kinds of data such as a resolution specified by a user. The control panel 114 is connected to, for example, the CPU 102 via the bus of the controller 101 to communicate with each other.

The environmental sensor 115 is a sensor that detects, for example, the ambient temperature and ambient humidity. The environmental sensor 115 is connected to the I/O unit 113 of the controller 101.

The head driver 116 is a circuit that selectively applies drive pulses forming the drive waveform given from the print controller 108 to the pressure generator of the liquid discharge head 122 based on the input image data (e.g., dot pattern data or pixel data) to drive the liquid discharge head 122. The head driver 116 is connected to the print controller 108 of the controller 101. The discharge amount of ink droplets (liquid) is controlled by, for example, controlling the amplitude of the drive waveform input to the pressure generator of the liquid discharge head 122, but the discharge amount may be controlled using other parameters.

The main scanning motor 117 is a device that is driven to rotate the timing belt to move the carriage 121 including the liquid discharge head 122 in the main scanning direction (the direction indicated by arrow Y). The main scanning motor 117 is connected to the main scanning motor driver 109 of the controller 101.

The sub-scanning motor 118 is a device that is driven to operate the conveyance roller to convey the medium 40, which is an object onto which liquid (ink) is discharged by the liquid discharge head 122, in the sub-scanning direction (X direction). The sub-scanning motor 118 is connected to the sub-scanning motor driver 110 of the controller 101.

The moving mechanism 140 moves the liquid discharge head 122 and the medium 40 relative to each other. The moving mechanism 140 includes the main guide rod 31, the sub sheet metal guide 32, the carriage 121, and the conveyance roller to construct the main scanning moving mechanism.

The moving mechanism 140 moves the liquid discharge head 122 and the medium 40 relative to each other in the main scanning direction (Y direction) by, for example, the main guide rod 31, the sub sheet metal guide 32, and the carriage 121. The moving mechanism 140 moves the liquid discharge head 122 and the medium 40 relative to each other in the sub-scanning direction by (X direction), for example, the conveyance roller that conveys the medium 40. In the present embodiment, the relative movement in the sub-scanning direction (X direction) by the moving mechanism 140 is intermittent movement. The intermittent movement means that the moving mechanism 140 alternately moves and stops at least one of the liquid discharge head 122 and the medium 40 relative to the other.

The fan 119 is driven to accelerate the convection of air inside the image forming apparatus 100 so as to prevent the temperature from increasing excessively due to the accumulation of warmed air in an upper portion of the image forming apparatus 100. The fan 119 is connected to the fan controller 111 of the controller 101.

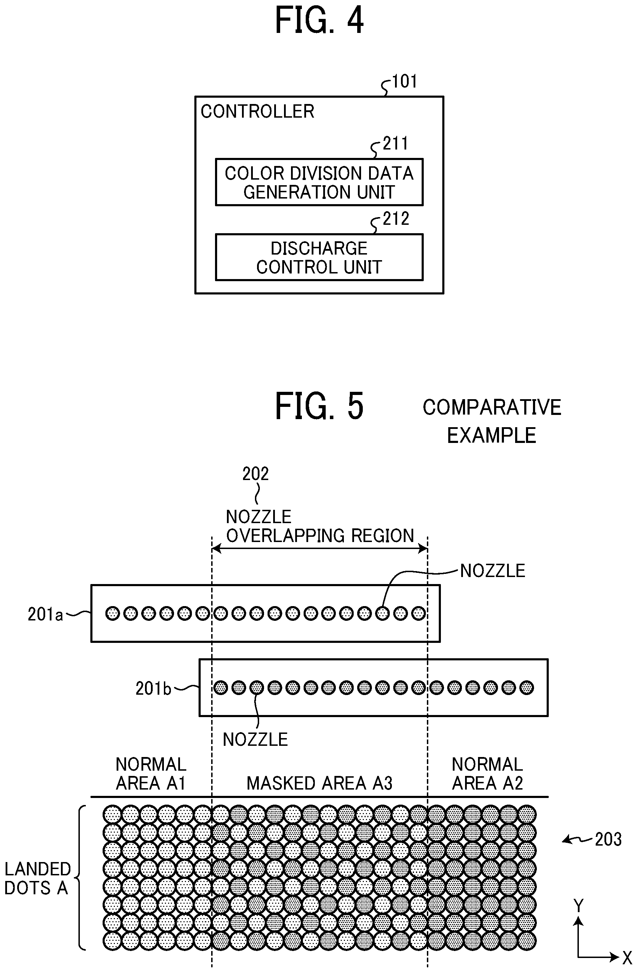

FIG. 4 is a block diagram illustrating an example of a functional configuration of the controller 101. The description of the components overlapping those in FIG. 3 may be omitted.

As illustrated in FIG. 4, the controller 101 includes a color division data generation unit 211 and a discharge control unit 212. Roughly speaking, the discharge control unit 212 controls discharge of ink.

When the color division data generation unit 211 receives image data to be printed, the color division data generation unit 211 generates color division data for each color of ink used in the image forming apparatus 100 from the received image data (an example of an input image). For example, when the image forming apparatus 100 uses inks of C, M, Y, and K, the color division data generation unit 211 generates color division data for each color of C, M, Y, and K from the received image data.

The discharge control unit 212 applies a dot data generation mask to the color division data of each color generated by the color division data generation unit 211 to generate printed-dot data. The dot data generation mask is, for example, a mask pattern for forming an image with printed dots mixed by two liquid discharge heads in a nozzle overlapping region (may be referred to simply as an overlapping region) of the end portions of the adjacent heads (i.e., adjacent heads 122a and 122b, or adjacent heads 122b and 122c).

The controller 101 implements these functions (the color division data generation unit 211 and the discharge control unit 212) by the CPU 102 executing a predetermined program. The controller 101 may implement a part or all of these functions by one or a plurality of processing circuits.

The term "processing circuit or circuitry" includes a programmed processor to execute each function by software, such as a processor implemented by an electronic circuit, and devices, such as an application-specific integrated circuit (ASIC), a digital signal processor (DSP), a field-programmable gate array (FPGA), and conventional circuit components arranged to perform the recited functions.

The controller 101 controls the liquid discharge head 122 and the moving mechanism 140 so that the liquid discharge head 122 and the medium 40 are moved relative to each other multiple times to apply ink onto the medium 40. The ink applied onto the medium 40 is fixed to the medium 40 to form dots in an image. More specifically, one ink droplet formed by the ink discharged from the liquid discharge head 122 lands on the medium 40, and then is dried and fixed to the medium 40. Thus, one dot in the image is formed on the medium 40. The image is formed as an aggregate of a plurality of dots.

A comparative example is described below.

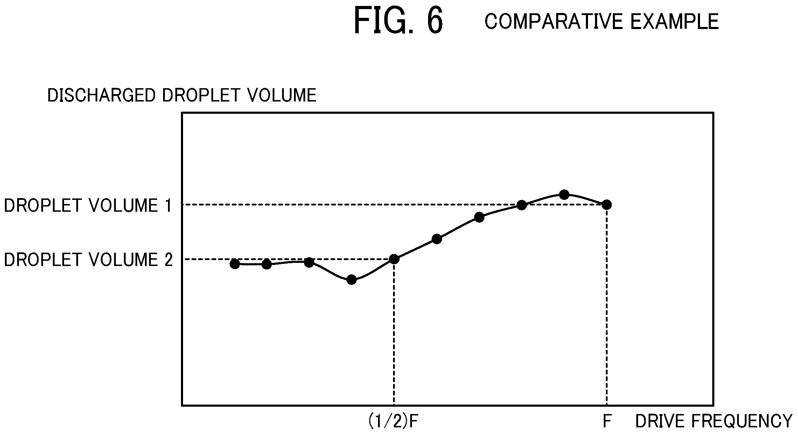

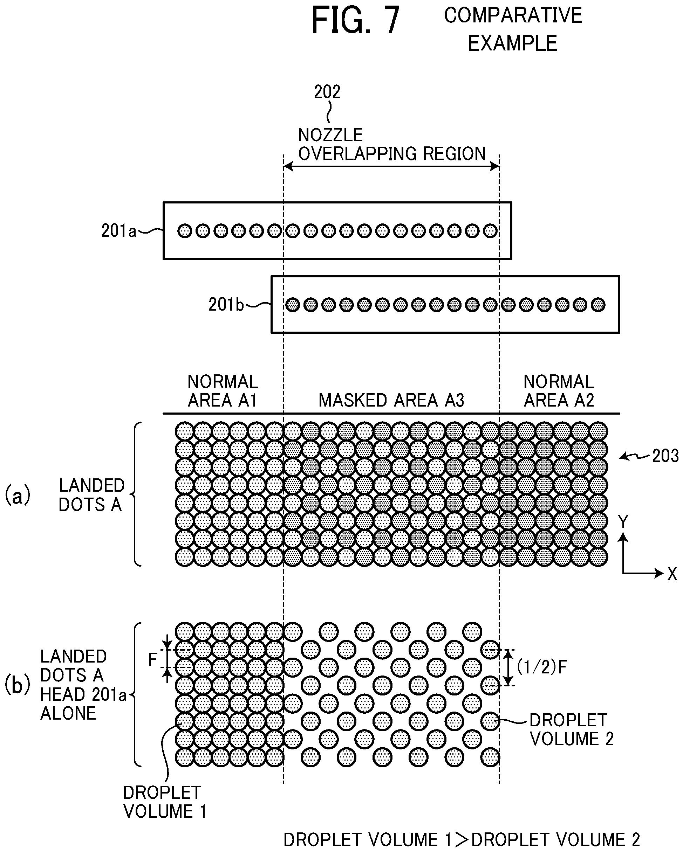

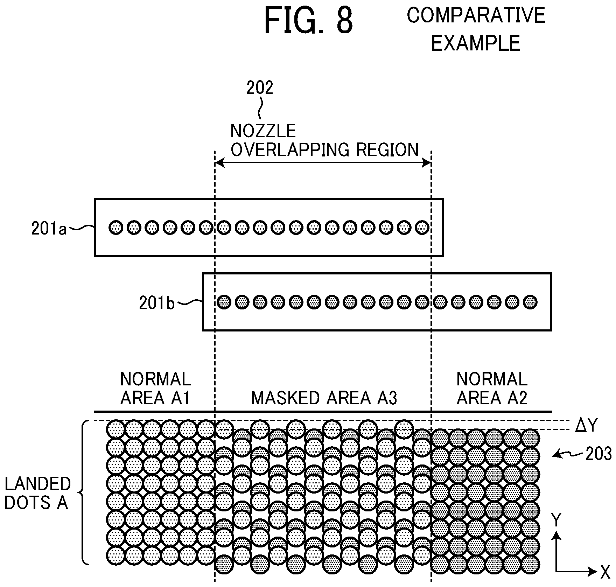

FIG. 5 is a diagram illustrating a mask pattern according to a comparative example when end nozzles of two heads 201a and 201b arranged in the X direction overlap each other. The end nozzles include nozzles near the end of the head in addition to the nozzle exactly disposed at the end of the head (i.e., 12 overlapped nozzles of each of the two heads 201a and 201b). FIG. 6 is a graph of drive frequency characteristics of a discharged droplet volume according to the comparative example. FIG. 7 is a diagram illustrating the drive frequency characteristics and the mask pattern according to the comparative example. FIG. 8 is a diagram illustrating a Y deviation and the mask pattern according to the comparative example. In FIG. 5, nozzles of the head 201a overlap nozzles of the head 201b in a nozzle overlapping region 202. The number of overlapped nozzles of each of the heads 201a and 201b is 12, but the number of overlapped nozzles may be more or less than 12.

The landed dots A illustrated in FIG. 5 indicate printed dots formed of droplets that are discharged from the head 201a and the head 201b and land at ideal positions on a medium 203. The landed dots A include a normal area A1, a normal area A2, and a masked area A3 corresponding to the nozzle overlapping region 202.

As illustrated in FIG. 5, the normal area A1 of the landed dots A is formed of the droplets discharged from the head 201a, and the normal area A2 is formed of the droplets discharged from the head 201b.

As illustrated in FIG. 5, the masked area A3 of the landed dots A is formed of the droplets discharged from nozzles in the nozzle overlapping region 202 of the head 201a and the head 201b. In the masked area A3 of the landed dots A illustrated in FIG. 5, X-Y uniform mask processing is performed to alternately arrange the printed dots formed by the head 201a and the printed dots formed by the head 201b in both the X direction and the Y direction. The masked area A3 is formed of the mixed printed dots of the two heads 201a and 201b by the X-Y uniform mask processing. Accordingly, the decrease in image quality, such as the density unevenness or the streak, due to variations of discharge properties of the head 201a and the head 201b or the deviation of landing positions caused by an airflow at the end portion of the liquid discharge head can be prevented.

As illustrated in FIG. 6, the volume of one droplet discharged from the liquid discharge head typically varies due to the difference in residual vibration of pressure waves remaining after discharge, which varies depending on the drive frequency of the drive waveform. For example, in FIG. 6, the volume of one droplet decreases from a droplet volume 1 at the drive frequency F to a droplet volume 2 at the drive frequency (1/2) F.

More specifically, as illustrated in a part (a) of FIG. 7, when the X-Y uniform mask processing is performed in the nozzle overlapping region 202 of the two heads 201a and 201b to distribute the printed dots, discharge intervals in the masked area A3 and the discharge intervals in the normal area A1 (A2) are different in one head 201a (201b). As a result, as illustrated in a part (b) of FIG. 7, the drive frequency per nozzle in the masked area A3 of the landed dots A corresponding to the nozzle overlapping region 202 decreases to (1/2) F compared to the drive frequency F in the normal areas A1 and A2. Accordingly, the normal areas A1 and A2 are formed of the printed dots with the droplet volume 1, and the masked area A3 is formed of the printed dots with the droplet volume 2. As a result, the masked area A3 is thinner in image density than the normal areas A1 and A2, causing white unevenness.

Further, as illustrated in FIG. 8, if the landing positions of the printed dots of one head are shifted from those of the other head due to the positional deviation (ΔY) in the Y direction between the two heads 201a and 201b or the difference in droplet speed between the two heads 201a and 201b, the printed dots of the head 201a are overlaid on the printed dots of the head 201b on the medium 203, and thus the masked area A3 of the landed dots A does not have the same density as that of the normal areas A1 and A2 of the landed dots A. The landed dots A described above are also visually recognized as the density unevenness or the streak.

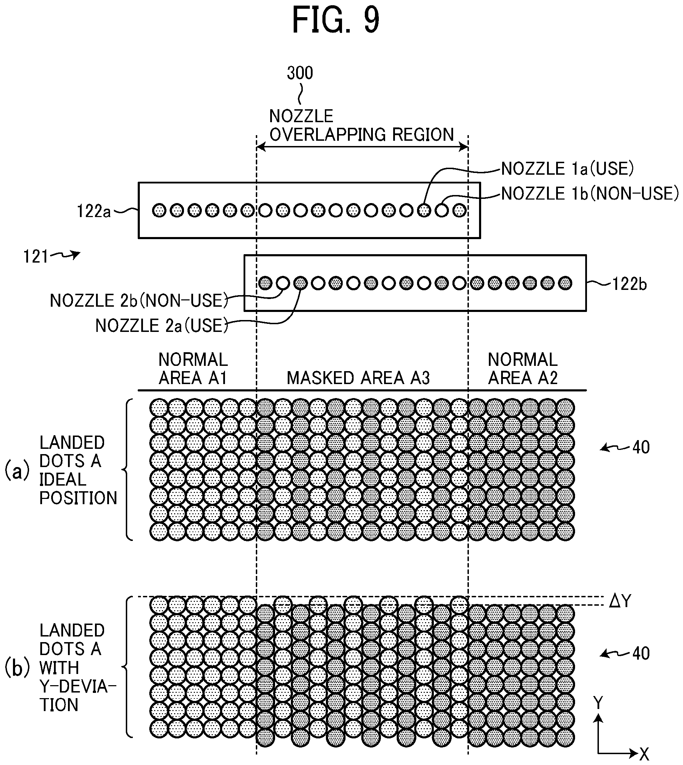

In the present embodiment, in a nozzle overlapping regions 300 (see FIG. 9) at the end portions of two adjacent heads, a mask pattern is used that prevents the density unevenness and the streak caused by the difference in the drive frequency characteristics of the discharged droplet volume, the positional deviation, or the difference in droplet speed between the heads to make the image quality in the nozzle overlapping region 300 at the end portions of the heads uniform.

FIG. 9 is a diagram illustrating a mask pattern according to the first embodiment. The nozzle overlapping region 300 between the two heads 122a and 122b will be described below as an example.

As illustrated in FIG. 9, the masked area A3 of the landed dots A is formed of the droplets discharged from nozzles in the nozzle overlapping region 300 of the head 122a and the head 122b. The masked area A3 has a length of 12 pixels in the X direction. On the other hand, in the nozzle overlapping region 300, an image can be formed by a total of 24 nozzles, i.e., 12 nozzles in the head 122a and 12 nozzles in the head 122b. Thus, the nozzles at one point in the nozzle overlapping region 300 are twice the nozzles at another one point in the normal areas A1 and A2 (i.e., a non-overlapping region other than the nozzle overlapping region 300 in the X direction).

As illustrated in FIG. 9, the discharge control unit 212 of the controller 101 sets the odd-numbered nozzles 1a from the end of the head 122a to "use" and sets the even-numbered nozzles 1b from the end of the head 122a to "non-use" in the nozzle array in the nozzle overlapping region 300 of the head 122a. In addition, the discharge control unit 212 of the controller 101 sets the odd-numbered nozzles 2a from the end of the head 122b to "use" and sets the even-numbered nozzles 2b from the end of the head 122b to "non-use" in the nozzle array in the nozzle overlapping region 300 of the head 122b. Thus, as illustrated in FIG. 9, in the nozzle overlapping region 300, the nozzle 1a (use) of the head 122a and the nozzle 2b (non-use) of the head 122b overlap each other in the X direction, and the nozzle 1b (non-use) of the head 122a and the nozzle 2a (use) of the head 122b overlap each other in the X direction.

Accordingly, as illustrated in FIG. 9, the discharge control unit 212 of the controller 101 forms a vertically striped mask pattern in which printed dots formed by the head 122a and printed dots formed by the head 122b are alternately arranged in the X direction and printed dots formed by each of the heads 122a and 122b (i.e., the same single head) are continuously arranged in the Y direction in mask processing of the nozzle overlapping region 300.

In other words, the pixel data (i.e., a mask pattern) formed by the discharge control unit 212 includes first pixel data for the head 122a (e.g., a first head) and second pixel data for the head 122b (e.g., a second head). The first pixel data includes first pixels, which correspond to the printed dots (pixels) formed by the head 122a, arrayed in the nozzle array direction and an intersecting direction intersecting the nozzle array direction, and the second pixel data includes second pixels, which correspond to the printed dots (pixels) formed by the head 122b, arrayed in the nozzle array direction and the intersecting direction. The first pixel data causes the head 122a (the first head) to discharge liquid droplets, and the second pixel data causes the head 122b (the second head) to discharge liquid droplets. The pixel data includes both the first pixels and the second pixels in the nozzle array direction and includes one of the first pixels and the second pixels in the intersecting direction (i.e., intersecting pixels) in the nozzle overlapping region. Thus, the discharge control unit 212 forms the vertically striped mask pattern based on the pixel data to to selectively discharge the liquid droplets from the multiple nozzles.

In the example illustrated in a part (a) of FIG. 9, the discharge intervals in the masked area A3 and the discharge intervals in the normal area A1 (A2) in the same single head are the same, and thus the printed dots of the normal areas A1 and A2 and the printed dots of the masked area A3 have the same drive frequency. Accordingly, the printed dots are not affected by the drive frequency characteristics illustrated in FIG. 6. The difference in the droplet volume due to the difference in the drive frequency characteristics as illustrated in FIG. 7 does not occur, and the dot sizes of the printed dots of the normal areas A1 and A2 and the masked area A3 can be identical.

Further, as illustrated in a part (b) of FIG. 9, even if the positional deviation (Y deviation) ΔY in the Y direction between the two heads 122a and 122b occurs, the printed dots are not overlaid one on another as illustrated in FIG. 8 because of the vertically striped mask pattern in which the printed dots formed by each of the heads 122a and 122b are continuously arranged in the Y direction. Thus, the mask pattern according to the present embodiment can prevent the decrease in image quality, such as the density unevenness or the streak, in the nozzle overlapping region 300 between the adjacent heads 122a and 122b as compared with the mask pattern according to the comparative example.

As described above, according to the present embodiment, in the mask pattern of the nozzle overlapping region 300 of the end portions of the adjacent heads 122a and 122b, the printed dots formed by the head 122a and the printed dots formed by the head 122b are alternately arranged in the X direction, but only the printed dots formed by the same single head (one of the head 122a and the head 122b) are arranged in the Y direction. Thus, in the nozzle overlapping region 300 of the end portions of the two adjacent heads 122a and 122b, the density unevenness and the streak caused by the difference in the drive frequency characteristics of the discharged droplet volume, the positional deviation, or the difference in droplet speed between the two heads 122a and 122b can be prevented, and the image quality in the nozzle overlapping region 300 of the end portions of the two adjacent heads 122a and 122b can be made uniform.

Further, according to the present embodiment, even if the positional deviation (Y deviation) ΔY in the Y direction between the two heads 122a and 122b occurs, the decrease in image quality, such as the density unevenness or the streak, in the nozzle overlapping region 300 between the adjacent heads 122a and 122b can be prevented.

A program to be executed on the image forming apparatus 100 according to the present embodiment is recorded and provided in a computer-readable recording medium, such as a compact disc-read only memory (CD-ROM), a flexible disk (FD), a compact disc-recordable (CD-R), or a digital versatile disc (DVD), in a file in installable or executable format.

Alternatively, the programs executed on the image forming apparatus 100 according to the present embodiment may be stored in a computer connected to a network such as the Internet and downloaded via the network. The program executed on the image forming apparatus 100 according to the present embodiment may be provided or distributed via a network such as the Internet.

Further, the program executed on the image forming apparatus 100 according to the present embodiment may be provided by being incorporated in advance in, for example, the ROM 103.

The program executed on the image forming apparatus 100 according to the present embodiment has a modular configuration including the above-described units (the color division data generation unit 211 and the discharge control unit 212). The CPU 102 (i.e., a processor) serving as actual hardware reads the program from the recording medium described above and executes the program so as to load these units described above on a main storage device to implement the color division data generation unit 211 and the discharge control unit 212 on the main storage device.

### Second Embodiment

A description is given below of a second embodiment of the present disclosure.

The second embodiment is different from the first embodiment in that the usage rate of the end nozzles of the head is reduced. In the following description of the second embodiment, descriptions of elements identical or similar to those in the first embodiment are omitted, and differences from the first embodiment are described.

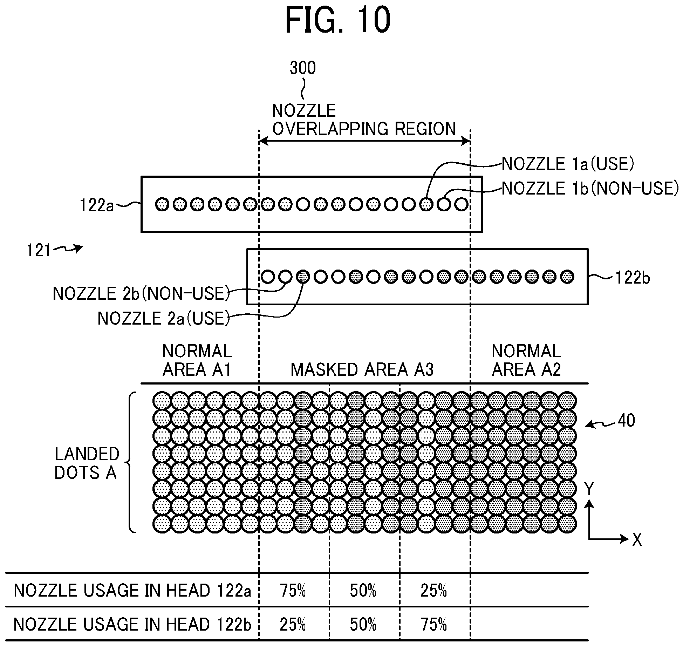

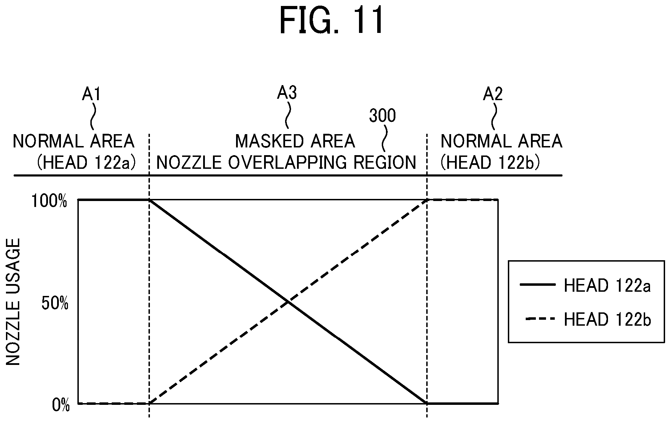

FIG. 10 is a diagram illustrating a mask pattern according to the second embodiment. FIG. 11 is a graph of nozzle usage rate in the nozzle overlapping region 300.

As illustrated in FIG. 10, the discharge control unit 212 of the controller 101 according to the present embodiment forms a vertically striped mask pattern in which printed dots formed by the head 122a and printed dots formed by the head 122b are mixed in the X direction and printed dots formed by each of the heads 122a and 122b (i.e., the same single head) are continuously arranged in the Y direction in mask processing of the nozzle overlapping region 300 of the heads 122a and 122b.

In the masked area A3 illustrated in FIG. 9 described in the first embodiment, the printed dots formed by the head 122a and the printed dots formed by the head 122b are alternately arranged one by one in the X direction. On the other hand, the discharge control unit 212 of the controller 101 according to the present embodiment reduces the nozzle usage rate of the head 122a (122b) lower at a position closer to the end of the head 122a (122b) as illustrated in FIGS. 10 and 11.

More specifically, as illustrated in FIG. 10, the discharge control unit 212 of the controller 101 sets 3rd, 6th, 8th, 9th, 11th, and 12th nozzles 1a from the end of the head 122a to "use" and sets 1st, 2nd, 4th, 5th, 7th and 10th nozzles 1b from the end of the head 122a to "non-use" in the nozzle array in the nozzle overlapping region 300 of the head 122a. In addition, the discharge control unit 212 of the controller 101 sets 3rd, 6th, 8th, 9th, 11th, and 12th nozzles 2a from the end of the head 122b to "use" and sets 1st, 2nd, 4th, 5th, 7th and 10th nozzles 2b from the end of the head 122b to "non-use" in the nozzle array in the nozzle overlapping region 300 of the head 122b.

In the example illustrated in FIGS. 10 and 11, similarly to FIG. 9, the discharge intervals in the masked area A3 and the discharge intervals in the normal area A1 (A2) in the same single head are the same, and thus the printed dots of the normal areas A1 and A2 and the printed dots of the masked area A3 have the same drive frequency. Accordingly, the printed dots are not affected by the drive frequency characteristics illustrated in FIG. 6. The difference in the droplet volume due to the difference in the drive frequency characteristics as illustrated in FIG. 7 does not occur.

Further, in the example illustrated in FIGS. 10 and 11, even if the positional deviation (Y deviation) ΔY in the Y direction between the two heads 122a and 122b occurs, the printed dots are not overlaid on one on another as illustrated in FIG. 8 because of the vertically striped mask pattern in which the printed dots formed by each of the heads 122a and 122b are continuously arranged in the Y direction.

Typically, a droplet discharged from a nozzle closer to the end of the liquid discharge head may be bent due to the influence of airflow, or the nozzle closer to the end of the liquid discharge head may have a difference in characteristics such as crosstalk. In the example illustrated in FIGS. 10 and 11, the deterioration of image quality due to, for example, the influence of airflow can be made unnoticeable by reducing the usage rate of the end nozzles of the two heads 122a and 122b.

As described above, according to the present embodiment, in addition to the effects described in the first embodiment, the usage rate of the end nozzles of the two heads 122a and 122b in the nozzle overlapping region 300 is reduced. Accordingly, the deterioration of image quality due to, for example, the influence of airflow can be made unnoticeable. The end nozzles are likely to cause the bending of droplets due to the influence of airflow or the difference in characteristics such as crosstalk.

### Third Embodiment

A description is given below of a third embodiment of the present disclosure.

The third embodiment is different from the first embodiment in that a mask pattern is used in which the nozzles on the most upstream side of an airflow caused by the movement of the carriage 121 in the Y direction are set to non-use. In the following description of the third embodiment, descriptions of elements identical or similar to those in the first embodiment are omitted, and differences from the first embodiment are described.

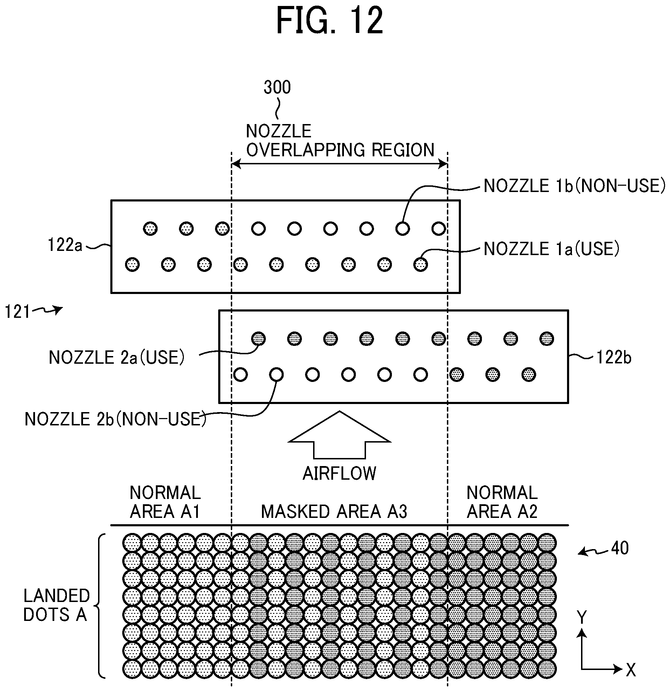

FIG. 12 is a diagram illustrating a mask pattern according to the third embodiment. As illustrated in FIG. 12, each of the heads 122a and 122b according to the present embodiment has two nozzle arrays each including multiple nozzles. In each of the heads 122a and 122b according to the present embodiment, the nozzles in one nozzle array in the first embodiment are alternately allocated to two nozzle arrays.

As illustrated in FIG. 12, the discharge control unit 212 of the controller 101 according to the present embodiment forms a vertically striped mask pattern in which printed dots formed by the head 122a and printed dots formed by the head 122b are mixed in the X direction and printed dots formed by each of the heads 122a and 122b (i.e., the same single head) are continuously arranged in the Y direction in mask processing of the nozzle overlapping region 300.

In the example illustrated in FIG. 12, the carriage 121 moves from top to bottom in FIG. 12. As illustrated in FIG. 12, the head 122b is disposed upstream from the head 122a in the direction of an airflow caused by the movement of the carriage 121. As illustrated in FIG. 12, the discharge control unit 212 of the controller 101 according to the present embodiment sets the nozzle 2b of the most upstream nozzle array in the direction of the airflow caused by the movement of the carriage 121 (i.e., the most upstream nozzle array in the direction of the movement of the carriage 121) in the nozzle overlapping region 300 of the head 2b to "non-use." Droplets discharged from the most upstream nozzle array are likely to be affected by the airflow caused by the movement of the carriage 121 in the Y direction.

In the example illustrated in FIG. 12, similarly to FIG. 9, the discharge intervals in the masked area A3 and the discharge intervals in the normal area A1 (A2) in the same single head are the same, and thus the printed dots of the normal areas A1 and A2 and the printed dots of the masked area A3 have the same drive frequency. Accordingly, the printed dots are not affected by the drive frequency characteristics illustrated in FIG. 6. The difference in the droplet volume due to the difference in the drive frequency characteristics as illustrated in FIG. 7 does not occur. Further, even if the positional deviation (Y deviation) ΔY in the Y direction between the two heads 122a and 122b occurs, the printed dots are not overlaid on one on another as illustrated in FIG. 8 because of the vertically striped mask pattern in which the printed dots formed by each of the heads 122a and 122b are continuously arranged in the Y direction.

Furthermore, in the example illustrated in FIG. 12, the nozzles on the most upstream side in the direction of the airflow caused by the movement of the carriage 121 are set to "non-use" in the mask pattern. Accordingly, the deterioration of image quality due to the bending of droplets caused by the airflow can be made unnoticeable.

In addition, when the airflow caused by the movement of the carriage 121 in the Y direction is reversed in FIG. 12 (i.e., when the carriage 121 moves from bottom to top in FIG. 12), the discharge control unit 212 of the controller 101 according to the present embodiment sets the nozzle 1b of the most upstream nozzle array in the direction of the airflow caused by the movement of the carriage 121 in the nozzle overlapping region 300 of the head 122a to "non-use." Droplets discharged from the most upstream nozzle array are likely to be affected by the airflow caused by the movement of the carriage 121 in the Y direction. Such control of the discharge control unit 212 allows the heads 122a and 122b to be applied to multi-pass printing.

As described above, according to the present embodiment, in addition to the effects described in the first embodiment, in the nozzle overlapping region 300 of the heads 122a and 122b, the nozzles on the most upstream side in the direction of the airflow caused by the movement of the carriage 121 (i.e., the direction intersecting the direction of the nozzle array) are set to "non-use," and thus the deterioration of image quality due to the bending of droplet caused by the airflow can be made unnoticeable.

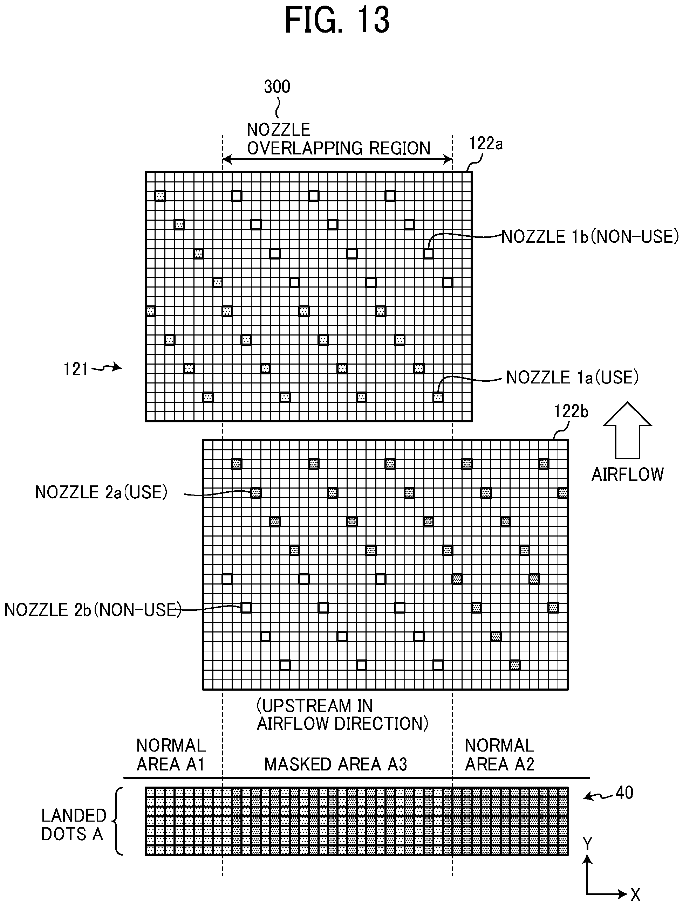

In the present embodiment, each of the heads 122a and 122b has two nozzle arrays, but the number of nozzle arrays is not limited thereto, and embodiments of the present disclosure include a liquid discharge head having eight nozzle arrays as illustrated in FIG. 13 or a liquid discharge head having other arrangements of the nozzle arrays.

In the present embodiment, a multi-pass method in which the liquid discharge head 122 mounted on the carriage 121 discharge ink droplets while the carriage 121 reciprocally moves has been described, but embodiments of the present disclosure are not limited thereto, and an embodiment of the present disclosure can also be applied to a line head method in which the liquid discharge head is fixed and the medium 40 is moved. In the case of the line head method, a mask pattern may be used in which the nozzles on the most upstream side which are likely to be affected by airflow in a conveyance direction of the medium 40 (i.e., the direction intersecting the nozzle array direction) are set to "non-use."

### Fourth Embodiment

A description is given below of a fourth embodiment of the present disclosure.

The fourth embodiment is different from the first embodiment in that the usage rate of the nozzles in the end portion of the head is reduced. Droplets discharged from the nozzles in the end portion of the head are likely to be bent. In the following description of the fourth embodiment, descriptions of elements identical or similar to those in the first embodiment are omitted, and differences from the first embodiment are described.

FIG. 14 is a diagram illustrating a mask pattern according to the fourth embodiment. FIG. 15 is a diagram illustrating droplets discharged from the end portion of the liquid discharge head.

As illustrated in FIG. 14, the discharge control unit 212 of the controller 101 according to the present embodiment forms a vertically striped mask pattern in which printed dots formed by the head 122a and printed dots formed by the head 122b are mixed in the X direction and printed dots formed by each of the heads 122a and 122b (i.e., the same single head) are continuously arranged in the Y direction in mask processing of the nozzle overlapping region 300 of the heads 122a and 122b.

As illustrated in FIG. 15, droplets a are discharged from the center portion of the heads 122a and 122b toward the medium 40 in the vertical direction (Z direction) and landed onto target positions on the medium 40.

On the other hand, as illustrated in FIG. 15, droplets b are discharged from the end portion of the heads 122a and 122b toward the medium 40 in the vertical direction (Z direction), blown outward by an end airflow, and landed onto landing positions deviated from the target positions on the medium 40. In FIG. 15, droplets b are bent outward and the landing positions of the droplets b are deviated from the target positions on the medium 40 toward the outside of the head, but droplets may be bent toward the center portion of the head depending on conditions such as the drive frequency, the size of the droplets, and a printing gap. If a large number of droplets b discharged from the end portions of the heads 122a and 122b are used in the mask pattern of the nozzle overlapping region 300, the image quality may significantly deteriorate.

For this reason, as illustrated in FIG. 14, the discharge control unit 212 of the controller 101 according to the present embodiment makes a distance X1 from the extreme end nozzle (i.e., the first use nozzle from the end of the head 122a) to the second end use nozzle (i.e., the second use nozzle from the end of the head 122a) longer than a distance X2 from the second use nozzle to a use nozzle inside the second use nozzle (i.e., the third use nozzle from the end of the head 122a) in the nozzle overlapping region 300 of the head 122a. Accordingly, the usage rate of the nozzles in the end portion of the head 122a can be reduced, and the deterioration of image quality can be made unnoticeable. Droplets discharged from the nozzles in the end portion of the head 122a are likely to be bent.

More specifically, as illustrated in FIG. 14, the discharge control unit 212 of the controller 101 sets 1st, 6th, 8th, 9th, 10th, and 11th nozzles from the end of the head 122a to "use" (i.e., use nozzle) and sets 2nd, 3rd, 4th, 5th, 7th, and 12th nozzles from the end of the head 122a to "non-use" (i.e., non-use nozzle) in the nozzle array in the nozzle overlapping region 300 of the head 122a. In addition, the discharge control unit 212 of the controller 101 sets 1st, 6th, 8th, 9th, 10th, and 11th nozzles from the end of the head 122b to "use" (i.e., use nozzle) and sets 2nd, 3rd, 4th, 5th, 7th, and 12th nozzles from the end of the head 122b to "non-use" (i.e., non-use nozzle) in the nozzle array in the nozzle overlapping region 300 of the head 122b.

In the example illustrated in FIG. 14, similarly to FIG. 9, the discharge intervals in the masked area A3 and the discharge intervals in the normal area A1 (A2) in the same single head are the same, and thus the printed dots of the normal areas A1 and A2 and the printed dots of the masked area A3 have the same drive frequency. Accordingly, the printed dots are not affected by the drive frequency characteristics illustrated in FIG. 6. The difference in the droplet volume due to the difference in the drive frequency characteristics as illustrated in FIG. 7 does not occur. Further, even if the positional deviation (Y deviation) ΔY in the Y direction between the two heads 122a and 122b occurs, the printed dots are not overlaid on one on another as illustrated in FIG. 8 because of the vertically striped mask pattern in which the printed dots formed by each of the heads 122a and 122b are continuously arranged in the Y direction.

As described above, according to the present embodiment, in addition to the effects described in the first embodiment, the usage rate of the nozzles in the end portion of the liquid discharge head can be reduced by widening an interval between use nozzles closer to the end of the liquid discharge head, and the deterioration of image quality can be made unnoticeable. Droplets discharged from the nozzles in the end portion of the head 122a are likely to be bent due to airflow.

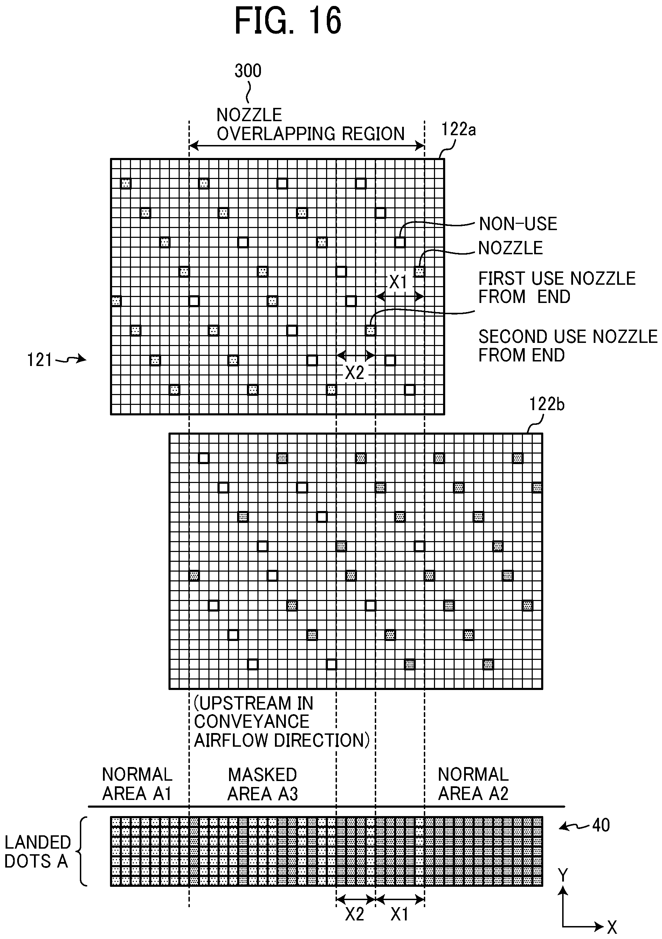

In the present embodiment, each of the heads 122a and 122b has one nozzle array, but the number of nozzle arrays is not limited thereto, and embodiments of the present disclosure include a liquid discharge head having eight nozzle arrays as illustrated in FIG. 16 or a liquid discharge head having other arrangements of the nozzle arrays. In the example illustrated in FIG. 16, the distance X1 from the extreme end nozzle (i.e., the first use nozzle from the end of head 122a) to the second end use nozzle (i.e., the second use nozzle from the end of the head 122a) is longer than the distance X2 from the second use nozzle to a use nozzle inside the second use nozzle (i.e., the third use nozzle from the end of the head 122a) in the X direction in the nozzle overlapping region 300 of the head 122a.

In the above-described embodiments, the "liquid discharge apparatus" includes the liquid discharge head 122 or the liquid discharge unit and drives the liquid discharge head 122 to discharge liquid. The liquid discharge apparatus may be, for example, any apparatus that can discharge liquid to a medium onto which liquid can adhere or any apparatus to discharge liquid toward gas or into a different liquid.

The "liquid discharge apparatus" may further include devices relating to feeding, conveying, and ejecting of the medium onto which liquid can adhere and also include a pretreatment device and an aftertreatment device.

The "liquid discharge apparatus" may be, for example, an image forming apparatus to form an image on a sheet by discharging ink, or a three-dimensional fabrication apparatus to discharge fabrication liquid to a powder layer in which powder material is formed in layers, so as to form a three-dimensional object.

The "liquid discharge apparatus" is not limited to an apparatus that discharges liquid to visualize meaningful images such as letters or figures. For example, the liquid discharge apparatus may be an apparatus that forms patterns having no meaning or an apparatus that fabricates three-dimensional images.

The above-described term "medium onto which liquid can adhere" represents a medium on which liquid is at least temporarily adhered, a medium on which liquid is adhered and fixed, or a medium into which liquid adheres and permeates. Specific examples of the "medium onto which liquid can adhere" include, but are not limited to, a recording medium such as a paper sheet, recording paper, a recording sheet of paper, a film, or cloth, an electronic component such as an electronic substrate or a piezoelectric element, and a medium such as layered powder, an organ model, or a testing cell. The "medium onto which liquid can adhere" includes any medium to which liquid adheres, unless otherwise specified.

Examples of materials of the "medium onto which liquid can adhere" include any materials to which liquid can adhere even temporarily, such as paper, thread, fiber, fabric, leather, metal, plastic, glass, wood, and ceramic.

The term "liquid" is not limited to a particular liquid as long as the liquid has a viscosity or surface tension to be discharged from the liquid discharge head 122. However, preferably, the viscosity of the liquid is not greater than 30 millipascal-second (mPa·s) under ordinary temperature and ordinary pressure or by heating or cooling. Examples of the liquid to be discharged include a solution, a suspension, or an emulsion including, for example, a solvent, such as water or an organic solvent; a colorant, such as dye or pigment; a functional material, such as a polymerizable compound, a resin, or a surfactant; a biocompatible material, such as deoxyribonucleic acid (DNA), amino acid, protein, or calcium; and an edible material, such as a natural colorant. Such a solution, a suspension, or an emulsion can be used for, e.g., inkjet ink; surface treatment liquid; a liquid for forming an electronic element component, a light-emitting element component, or an electronic circuit resist pattern; or a material solution for three-dimensional fabrication.

The liquid discharge apparatus may be an apparatus to move the liquid discharge head 122 and the medium onto which liquid can adhere relative to each other. However, the liquid discharge apparatus is not limited to such an apparatus. For example, the liquid discharge apparatus may be a serial head apparatus that moves the liquid discharge head 122 or a line head apparatus that does not move the liquid discharge head 122.

Examples of the liquid discharge apparatus further include: a treatment liquid applying apparatus that discharges a treatment liquid onto a sheet to apply the treatment liquid to the surface of the sheet, for reforming the surface of the sheet; and an injection granulation apparatus that injects a composition liquid, in which a raw material is dispersed in a solution, through a nozzle to granulate fine particle of the raw material.

Aspects of the present disclosure are, for example, as follows.

### Aspect 1

A liquid discharge head includes multiple heads and a discharge control unit. Each of the multiple heads has a nozzle array including multiple nozzles. The liquid discharge head selectively discharges liquid droplets from the nozzles. The adjacent heads are installed with a nozzle overlapping region at an end of the nozzle array in a row direction. The discharge control unit creates data in a direction parallel to the row direction of the nozzle array with both pixel data by one of the multiple heads and pixel data by another of the multiple heads, and creates data in a direction intersecting the row direction of the nozzle array with either the pixel data by one of the multiple heads or the pixel data by the other of the multiple of heads.

In other words, a liquid discharge apparatus includes multiple heads and a discharge control unit. The multiple heads include a first head having a first nozzle array having multiple nozzles arrayed in an array direction and a second head adjacent to the first head in an intersecting direction intersecting the array direction. The first nozzle array has first overlapped nozzles in one end of the multiple nozzles in the array direction. The second head has a second nozzle array having multiple nozzles arrayed in the array direction. The second nozzle array has second overlapped nozzles in another end of the multiple nozzles in the array direction. The second overlapped nozzles are overlapped with the first overlapped nozzles in an overlapping region in the array direction. The discharge control unit causes the multiple heads to discharge liquid droplets to form mask pattern having both of first pixels formed by the liquid droplets discharged from the first nozzle array and second pixels formed by the liquid droplets discharged from the second nozzle array in the overlapping region (the first pixels and the second pixels are arrayed in the array direction) and intersecting pixels arrayed in the intersecting direction (the intersecting pixels have either the first pixels formed by the first nozzle array or the second pixels formed by the second nozzle array arrayed in the intersecting direction in the overlapping region).

### Aspect 2

In the liquid discharge head according to Aspect 1, the discharge control unit reduces a usage rate of end nozzles of each of the one head and the other head in the nozzle overlapping region.

In other words, the discharge control unit reduces a usage rate of the first overlapped nozzles of the first nozzle array in the overlapping region lower than a usage rate of nozzles of the first nozzle array in a non-overlapping region other than the overlapping region of the first head, and reduces a usage rate of the second overlapped nozzles of the second nozzle array in the overlapping region lower than a usage rate of nozzles of the second nozzle array in a non-overlapping region other than the overlapping region of the second head.

Alternatively, the circuitry reduces a first usage rate of the first overlapped nozzles of the first nozzle array toward one end of the first head in the array direction in the overlapping region, increases a second usage rate of the second overlapped nozzles of the second nozzle array toward one end of the second head in the array direction in the overlapping region with a decrease in the first usage rate toward the one end of the first head, reduces the second usage rate of the second overlapped nozzles of the second nozzle array toward another end of the second head in the array direction in the overlapping region, and increases the first usage rate of the first overlapped nozzles of the first nozzle array toward another end of the first head in the array direction in the overlapping region with a decrease in the second usage rate toward said another end of the second head.

### Aspect 3

In the liquid discharge head according to Aspect 1, wherein the discharge control unit does not use nozzles of the nozzle array on the most upstream side in the direction intersecting the row direction of the nozzle array in the nozzle overlapping region.

In other words, the liquid discharge apparatus according to Aspect 1, further includes a carriage mounting the first head and the second head to move the first head and the second head in a moving direction along the intersecting direction. The first head further includes multiple nozzle arrays including the first nozzle array. The second head further includes multiple nozzle arrays including the second nozzle array. The discharge control unit causes the multiple heads not to discharge the liquid droplets from the most upstream nozzle array, in the moving direction, among the first multiple nozzle arrays and the second multiple nozzle arrays in the overlapping region.

### Aspect 4

In the liquid discharge head according to Aspect 1, the discharge control unit makes a distance from the extreme end use nozzle to the second end use nozzle longer than a distance from the second end use nozzle to a use nozzle inside the second end use nozzle in the nozzle overlapping region.

In other words, the discharge control unit makes a distance from a first use nozzle to a second use nozzle longer than a distance from the second use nozzle to a third use nozzle from each of one end of the first head and another end of the second head in the array direction among each of the first overlapped nozzles and the second overlapped nozzles in the overlapping region.

### Aspect 5

In the liquid discharge head according to Aspect 1, the number of nozzles in the nozzle overlapping region is twice the number of nozzles in a normal region other than the nozzle overlapping region.

In other words, a number of nozzles at one point in the overlapping region is twice a number of nozzles at another one point in a non-overlapping region other than the overlapping region in the array direction in the multiple heads.

### Aspect 6

A liquid discharge unit includes the liquid discharge head according to any one of Aspects 1 to 5 and at least one of a head tank, a carriage, a supply mechanism, a maintenance mechanism, and a main-scanning moving mechanism.

### Aspect 7

A liquid discharge apparatus includes the liquid discharge head according to any one of Aspects 1 to 5 and a controller to drive the liquid discharge head to discharge a liquid.

In other words, the liquid discharge apparatus according to any one of Aspects 1 to 5, further includes a controller including the discharge control unit to drive the multiple heads to selectively discharge the liquid droplets to form an image of dots onto a medium.

### Aspect 8

A liquid discharge method for a liquid discharge head includes a discharge control process. The liquid discharge head includes multiple heads. Each of the multiple heads has a nozzle array including multiple nozzles. The liquid discharge head selectively discharges liquid droplets from the nozzles. The adjacent heads are installed with a nozzle overlapping region at an end of the nozzle array in a row direction. In the discharge control process, data in a direction parallel to the row direction of the nozzle array is created with both pixel data by one of the multiple heads and pixel data by another of the multiple heads, and data in a direction intersecting the row direction of the nozzle array is created with either the pixel data by one of the multiple heads or the pixel data by the other of the multiple of heads.

In other words, a liquid discharge method includes causing a first head to discharge liquid droplets. The first head has a first nozzle array having multiple nozzles arrayed in an array direction. The first nozzle array has first overlapped nozzles in one end of the multiple nozzles in the array direction. The liquid discharge method further includes causing a second head to discharge the liquid droplets. The second head is disposed adjacent to the first head in an intersecting direction intersecting the array direction. The second head has a second nozzle array having multiple nozzles arrayed in the array direction. The second nozzle array has second overlapped nozzles in another end of the multiple nozzles in the array direction. The second overlapped nozzles are overlapped with the first overlapped nozzles in an overlapping region in the array direction. The liquid discharge method further includes causing the first head and the second head to discharge the liquid droplets to form mask pattern having both of first pixels formed by the liquid droplets discharged from the first nozzle array and second pixels formed by the liquid droplets discharged from the second nozzle array in the overlapping region (the first pixels and the second pixels are arrayed in the array direction) and intersecting pixels arrayed in the intersecting direction (the intersecting pixels have either the first pixels formed by the first nozzle array or the second pixels formed by the second nozzle array arrayed in the intersecting direction in the overlapping region).

### Aspect 9

A program controls a computer that controls a liquid discharge head. The liquid discharge head includes multiple heads. Each of the multiple heads has a nozzle array including multiple nozzles. The liquid discharge head selectively discharges liquid droplets from the nozzles. The adjacent heads are installed with a nozzle overlapping region at an end of the nozzle array in a row direction. The program causes the computer to function as a discharge control unit that creates data in a direction parallel to the row direction of the nozzle array with both pixel data by one of the multiple heads and pixel data by another of the multiple heads, and creates data in a direction intersecting the row direction of the nozzle array with either the pixel data by one of the multiple heads or the pixel data by the other of the multiple of heads.

In other words, a carrier medium carrying computer readable code for controlling a computer system to carry out a method. The method includes causing a first head to discharge liquid droplets. The first head has a first nozzle array having multiple nozzles arrayed in an array direction. The first nozzle array has first overlapped nozzles in one end of the multiple nozzles in the array direction. The method further includes causing a second head to discharge the liquid droplets. The second head is disposed adjacent to the first head in an intersecting direction intersecting the array direction. The second head has a second nozzle array having multiple nozzles arrayed in the array direction. The second nozzle array has second overlapped nozzles in another end of the multiple nozzles in the array direction. The second overlapped nozzles are overlapped with the first overlapped nozzles in an overlapping region in the array direction. The method further includes causing the first head and the second head to discharge the liquid droplets to form mask pattern having both of first pixels formed by the liquid droplets discharged from the first nozzle array and second pixels formed by the liquid droplets discharged from the second nozzle array in the overlapping region (the first pixels and the second pixels are arrayed in the array direction) and intersecting pixels arrayed in the intersecting direction (the intersecting pixels have either the first pixels formed by the first nozzle array or the second pixels formed by the second nozzle array arrayed in the intersecting direction in the overlapping region).

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A liquid discharge apparatus (100) comprising:
multiple heads (122) including:
a first head (122a) having a first nozzle array having multiple nozzles arrayed in an array direction, the first nozzle array having first overlapped nozzles in one end of the multiple nozzles in the array direction; and
a second head (122b) adjacent to the first head (122a) in an intersecting direction intersecting the array direction, the second head (122b) having a second nozzle array having multiple nozzles arrayed in the array direction, the second nozzle array having second overlapped nozzles in another end of the multiple nozzles in the array direction, the second overlapped nozzles overlapped with the first overlapped nozzles in an overlapping region (300) in the array direction; and
a discharge control unit (212) configured to cause the multiple heads (122) to discharge liquid droplets to form mask pattern having:
both of first pixels formed by the liquid droplets discharged from the first nozzle array and second pixels formed by the liquid droplets discharged from the second nozzle array in the overlapping region (300), the first pixels and the second pixels arrayed in the array direction; and
intersecting pixels arrayed in the intersecting direction, the intersecting pixels having either the first pixels formed by the first nozzle array or the second pixels formed by the second nozzle array arrayed in the intersecting direction in the overlapping region (300).

2. The liquid discharge apparatus (100) according to claim 1,
wherein the discharge control unit (212) is further configured to:
reduce a usage rate of the first overlapped nozzles of the first nozzle array in the overlapping region (300) lower than a usage rate of nozzles of the first nozzle array in a non-overlapping region (300) other than the overlapping region (300) of the first head (122a); and
reduce a usage rate of the second overlapped nozzles of the second nozzle array in the overlapping region (300) lower than a usage rate of nozzles of the second nozzle array in a non-overlapping region (300) other than the overlapping region (300) of the second head (122b).

3. The liquid discharge apparatus (100) according to claim 1,
wherein the discharge control unit (212) is further configured to:
reduce a first usage rate of the first overlapped nozzles of the first nozzle array toward one end of the first head (122a) in the array direction in the overlapping region;
increase a second usage rate of the second overlapped nozzles of the second nozzle array toward one end of the second head (122b) in the array direction in the overlapping region with a decrease in the first usage rate toward the one end of the first head (122a);
reduce the second usage rate of the second overlapped nozzles of the second nozzle array toward another end of the second head (122b) in the array direction in the overlapping region; and
increase the first usage rate of the first overlapped nozzles of the first nozzle array toward another end of the first head (122a) in the array direction in the overlapping region with a decrease in the second usage rate toward said another end of the second head (122b).

4. The liquid discharge apparatus (100) according to claim 1, further comprising a carriage (121) mounting the first head (122a) and the second head (122b) to move the first head (122a) and the second head (122b) in a moving direction along the intersecting direction,
wherein the first head (122a) further includes first multiple nozzle arrays including the first nozzle array,
the second head (122b) further includes second multiple nozzle arrays including the second nozzle array,
the discharge control unit (212) is further configured to cause the multiple heads (122) not to discharge the liquid droplets from the most upstream nozzle array, in the moving direction, among the first multiple nozzle arrays and the second multiple nozzle arrays in the overlapping region (300).

5. The liquid discharge apparatus (100) according to claim 1,
wherein the discharge control unit (212) is further configured to make a distance from a first use nozzle to a second use nozzle longer than a distance from the second use nozzle to a third use nozzle from each of one end of the first head (122a) and another end of the second head (122b) in the array direction among each of the first overlapped nozzles and the second overlapped nozzles in the overlapping region (300).

6. The liquid discharge apparatus (100) according to claim 1,
wherein a number of nozzles at one point in the overlapping region (300) is twice a number of nozzles at another one point in a non-overlapping region other than the overlapping region (300) in the array direction in the multiple heads (122).

7. The liquid discharge apparatus (100) according to any one of claims 1 to 6, further comprising:
at least one of a head tank, a carriage (121), a supply mechanism, a maintenance mechanism (81), and a main-scanning moving mechanism.

8. The liquid discharge apparatus (100) according to any one of claims 1 to 6, further comprising a controller (101) including the discharge control unit (212) configured to to drive the multiple heads (122) to selectively discharge the liquid droplets to form an image of dots onto a medium.

9. A liquid discharge method comprising:
causing a first head (122a) to discharge liquid droplets, the first head (122a) having a first nozzle array having multiple nozzles arrayed in an array direction, the first nozzle array having first overlapped nozzles in one end of the multiple nozzles in the array direction; and
causing a second head (122b) to discharge the liquid droplets, the second head (122b) disposed adjacent to the first head (122a) in an intersecting direction intersecting the array direction, the second head (122b) having a second nozzle array having multiple nozzles arrayed in the array direction, the second nozzle array having second overlapped nozzles in another end of the multiple nozzles in the array direction, and the second overlapped nozzles overlapped with the first overlapped nozzles in an overlapping region (300) in the array direction; and
causing the first head (122a) and the second head (122b) to discharge the liquid droplets to form mask pattern having:
both of first pixels formed by the liquid droplets discharged from the first nozzle array and second pixels formed by the liquid droplets discharged from the second nozzle array in the overlapping region (300), the first pixels and the second pixels arrayed in the array direction; and
intersecting pixels arrayed in the intersecting direction, the intersecting pixels having either the first pixels formed by the first nozzle array or the second pixels formed by the second nozzle array arrayed in the intersecting direction in the overlapping region (300).

10. A non-transitory recording medium storing a plurality of instructions which, when executed by one or more processors, causes the one or more processors to perform a method, comprising:
causing a first head (122a) to discharge liquid droplets, the first head (122a) having a first nozzle array having multiple nozzles arrayed in an array direction, the first nozzle array having first overlapped nozzles in one end of the multiple nozzles in the array direction; and
causing a second head (122b) to discharge the liquid droplets, the second head (122b) disposed adjacent to the first head (122a) in an intersecting direction intersecting the array direction, the second head (122b) having a second nozzle array having multiple nozzles arrayed in the array direction, the second nozzle array having second overlapped nozzles in another end of the multiple nozzles in the array direction, and the second overlapped nozzles overlapped with the first overlapped nozzles in an overlapping region (300) in the array direction; and
causing the first head (122a) and the second head (122b) to discharge the liquid droplets to form mask pattern having:
both of first pixels formed by the liquid droplets discharged from the first nozzle array and second pixels formed by the liquid droplets discharged from the second nozzle array in the overlapping region (300), the first pixels and the second pixels arrayed in the array direction; and
intersecting pixels arrayed in the intersecting direction, the intersecting pixels having either the first pixels formed by the first nozzle array or the second pixels formed by the second nozzle array arrayed in the intersecting direction in the overlapping region (300).
